(19) **Europäisches Patentamt / European Patent Office / Office européen des brevets**

(11) **EP 2 239 244 A1**

(12) **EUROPEAN PATENT APPLICATION**
published in accordance with Art. 153(4) EPC

(43) Date of publication:
**13.10.2010 Bulletin 2010/41**

(21) Application number: **08870403.6**

(22) Date of filing: **25.12.2008**

(51) Int Cl.:
***C04B 35/46*** (2006.01)

(86) International application number:
**PCT/JP2008/073596**

(87) International publication number:
**WO 2009/087912 (16.07.2009 Gazette 2009/29)**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **07.01.2008 JP 2008000310**
**06.06.2008 JP 2008148909**
**29.09.2008 JP 2008249970**

(71) Applicant: **Sumitomo Chemical Company, Limited Tokyo 104-8260 (JP)**

(72) Inventors:
• **MAKI, Hajime**
 **Tsukuba-shi**
 **Ibaraki 305-0821 (JP)**
• **TOHMA, Tetsuro**
 **Niihama-shi**
 **Ehime 792-0002 (JP)**
• **SUZUKI, Keiichiro**
 **Niihama-shi**
 **Ehime 792-0871 (JP)**

(74) Representative: **Vossius & Partner**
 **Siebertstrasse 4**
 **81675 München (DE)**

(54) **METHOD FOR PRODUCING ALUMINUM TITANATE CERAMIC**

(57)     The invention is to provide a process for producing an aluminium titanate ceramic by firing a pre-mixture of a titania source powder, an alumina source powder and a magnesia source powder, for a short period of time. The production process of the invention comprises mixing a titania source powder and an alumina source powder followed by dry process grinding in the presence of grinding media under a grinding condition of an acceleration of at least 2G to give a pre-mixture, and firing the resulting pre-mixture. The titania source powder and the alumina source powder may be mixed together with a magnesia source powder and a silica source powder. Preferably, a vibration mill is used for the grinding. Grinding the aluminium titanate ceramic produced according to the production process of the invention gives an aluminium titanate ceramic powder.

**Description**

TECHNICAL FIELD

The present invention relates to a process for producing aluminium titanate ceramics, in particular to a process for producing aluminium titanate ceramics by dry process.

BACKGROUND ART

Aluminium titanate ceramics are obtained by firing a titanium source powder and an alumina source powder, and are known as ceramics excellent in heat resistance. For example, Non-Patent Reference 1 (Key Engineering Materials, Vols. 336-338, 2007. pp. 1327-1330) discloses a process comprising grinding a titania source powder and an alumina source powder while kept dispersed in water, removing water through evaporation to dryness to give a powdery pre-mixture, and firing the resulting pre-mixture.

Patent Reference 1 (WO2005/105704) discloses a process comprising grinding a titania source powder and an alumina source powder in the presence of a small amount of various agents of organic components, and firing the resulting powdery pre-mixture.

However, the conventional production processes have a problem in that they take a lot of time to produce aluminium titanate ceramics by firing the pre-mixture.

DISCLOSURE OF THE INVENTION

PROBLEMS THAT THE INVENTION IS TO SOLVE

Accordingly, the inventors have diligently studied for the purpose of developing a process capable of producing aluminium titanate ceramics by firing a pre-mixture for a short period of time, and as a result, have reached the present invention.

MEANS FOR SOLVING THE PROBLEMS

Specifically, the invention provides a process for producing an aluminium titanate ceramic, comprising mixing a titania source powder and an alumina source powder followed by dry grinding in the presence of grinding media under a grinding condition of an acceleration of at least 2G to give a pre-mixture, and firing the resulting pre-mixture.

In the above-mentioned production process, the amount of the titania source powder to be used, as titania, is preferably from 30 to 70 parts by mass relative to the total, 100 parts by mass, of the amount of the titania source powder to be used, as titania, and the amount of the alumina source powder to be used, as alumina.

In the invention, preferably, the titania source powder and the alumina source powder are mixed together with a magnesia source powder; or the titania source powder and the alumina source powder may be mixed together with a silica source powder. The silica source powder is preferably feldspar or glass frit. In the production process, preferably, a vibration mill may be used for the grinding. Preferably, the amplitude of the vibration mill is from 2 to 20 mm, and the vibration frequency thereof is from 500 to 5000 times/min.

In the production process, the amount of the magnesia source powder to be used, as magnesia, is preferably at most 10 parts by mass relative to the total, 100 parts by mass, of the amount of the titania source powder to be used, as titania, and the amount of the alumina source powder to be used, as alumina. Also preferably, the amount of the silica source powder to be used, as silica, is at most 20 parts by mass relative to the total, 100 parts by mass, of the amount of the titania source powder to be used, as titania, and the amount of the alumina source powder to be used, as alumina.

The invention also includes a process for producing an aluminium titanate ceramic powder, comprising preparing an aluminium titanate ceramic according to any of the above-mentioned production processes and grinding the resulting aluminium titanate ceramic.

The invention also includes a process for producing a pre-mixture containing a titania source powder and an alumina source powder and capable of being converted into an aluminium titanate ceramic by firing, wherein a titania source powder and an alumina source powder are mixed and ground by dry process under a grinding condition of an acceleration of at least 2G.

EFFECT OF THE INVENTION

According to the production process of the invention, an aluminium titanate ceramic can be produced by firing a pre-mixture for a short period of time.

BEST MODE FOR CARRYING OUT THE INVENTION

The titania source powder for use in the production process of the invention is, for example, a powder of titanium oxide. Titanium oxide includes, for example, titanium(IV) oxide, titanium(III) oxide, titanium(II) oxide, etc. Preferred is titanium(IV) oxide. The crystal type of titanium(IV) oxide includes an anatase type, a rutile type, a brookite type, etc., and may be amorphous. More preferred are an anatase type and a rutile type.

The titania source powder includes a powder of a compound to be led to titania (titanium oxide) by firing alone in air. The compound includes, for example, titanium salt, titanium alkoxide, titanium hydroxide, titanium nitride, titanium sulfide, titanium metal, etc.

The titanium salt concretely includes titanium trichloride, titanium tetrachloride, titanium(IV) sulfide, titanium (VI) sulfide, titanium(IV) sulfate, etc. The titanium alkoxide concretely includes titanium(IV) ethoxide, titanium(IV) methoxide, titanium(IV) t-butoxide, titanium(IV) isobutoxide, titanium(IV) n-propoxide, titanium(IV) tetraisopropoxide, and their chelate compounds, etc.

In the invention, only one of the titania source powder may be used, or two or more thereof may be used as combined.

The titania source powder is preferably a powder of titanium oxide.

The titania source powder may contain inevitable impurities derived from starting materials or contaminant mixed in production steps.

As the alumina source powder, for example, mentioned is a powder of alumina (aluminium oxide). The crystal type of alumina includes a γ type, a δ type, a θ type, an α type, etc., and may be amorphous. As the alumina source powder, preferred is an α-type alumina.

The alumina source powder may be a powder of compound to be led to alumina by firing alone in air. The compound includes, for example, aluminium salt, aluminium alkoxide, aluminium hydroxide, aluminium metal, etc.

The aluminium salt may be an inorganic salt with an inorganic acid, or an organic salt with an organic acid. The aluminium inorganic salt concretely includes, for example, nitrates with aluminium such as aluminium nitrate, ammonium aluminium nitrate; and carbonates with aluminium such as ammonium aluminium carbonate, etc. The aluminium organic salt includes, for example, aluminium oxalate, aluminium acetate, aluminium stearate, aluminium lactate, aluminium laurate, etc.

Concretely, the aluminium alkoxide includes, for example, aluminium isopropoxide, aluminium ethoxide, aluminium sec-butoxide, aluminium tert-butoxide, etc.

The crystal type of aluminium hydroxide includes, for example, a gibbsite type, a bayerite type, a norstrandite type, a boehmite type, a pseudo-boehmite type, etc, and may be amorphous. Amorphous aluminium hydroxide includes, for example, an aluminium hydrolyzate to be obtained by hydrolysis of an aqueous solution of a water-soluble aluminium compound such as aluminium salt, aluminium alkoxide, etc.

In the invention, only one of the alumina source powder may be used, or two or more thereof may be used as combined.

The alumina source powder is preferably a powder of alumina.

The alumina source powder may contain inevitable impurities derived from starting materials or contaminant mixed in production steps.

The amount of the titania source powder and the alumina source powder to be used is determined by the calculated result in terms of titania [$TiO_2$] and alumina [$Al_2O_3$]. In general, the amount of the titania source powder to be used, as titania, is from 30 parts by mass to 70 parts by mass and the amount of the alumina source powder to be used, as alumina, is from 70 parts by mass to 30 parts by mass, relative to the total, 100 parts by mass, of the amount of the titania source powder to be used, as titania, and the amount of the alumina source powder to be used, as alumina; preferably, the amount of the titania source powder to be used, as titania, is from 40 parts by mass to 60 parts by mass, and the amount of the alumina source powder to be used, as alumina, is from 60 parts by mass to 40 parts by mass.

In the production process of the invention, the titania source powder and the alumina source powder are the starting material powders. These starting material powders are mixed and ground by dry process to give a pre-mixture. The titania source powder and the alumina source powder may be mixed together with a magnesium source powder and ground by dry process to give a pre-mixture.

As the magnesia source powder, for example, mentioned is a powder of magnesia (magnesium oxide).

The magnesia source powder includes a compound capable of being led to magnesia by firing alone in air. The compound includes, for example, magnesium salt, magnesium alkoxide, magnesium hydroxide, magnesium nitride, magnesium metal, etc.

The magnesium salt concretely includes magnesium chloride, magnesium perchlorate, magnesium phosphate, magnesium pyrophosphate, magnesium oxalate, magnesium nitrate, magnesium carbonate, magnesium acetate, magnesium sulfate, magnesium citrate, magnesium lactate, magnesium stearate, magnesium salicylate, magnesium myristate, magnesium gluconate, magnesium dimethacrylate, magnesium benzoate, etc.

The magnesium alkoxide concretely includes magnesium methoxide, magnesium ethoxide, etc.

As the magnesia source powder, usable is a powder serving also as an alumina source powder. Such powder includes, for example, a powder of magnesia spinel ($MgAl_2O_4$).

In the invention, only one of the magnesia source powder may be used or two or more thereof may be used as combined.

The magnesia source powder may contain inevitable impurities derived from starting materials or contaminant mixed in production steps.

The amount of the magnesia source powder to be used, as magnesia [MgO], is generally from 0.1 parts by mass to 10 parts by mass, preferably at most 8 parts by mass relative to the total, 100 parts by mass, of the amount of the titania source powder to be used, as titania [$TiO_2$] and the amount of the alumina source powder to be used, as alumina [$Al_2O_3$].

In the production process of the invention, the titania source powder and the alumina source powder, and in addition, optionally the magnesia source powder are used as the starting material powders, and these starting material powders are mixed and ground by dry process to give a pre-mixture. These starting material mixtures may be mixed together with a silica source powder and ground by dry process to give a pre-mixture.

The silica source powder includes, for example, silicon oxide (silica) such as silicon dioxide, silicon monoxide, etc.

The silica source powder may also be a powder of a compound capable of being led to silica by firing alone in air. The compound includes, for example, silicic acid, silicon carbide, silicon nitride, silicon sulfide, silicon tetrachloride, silicon acetate, sodium silicate, sodium orthosilicate, glass frit, etc. Preferred are glass frit and the like, from the viewpoint of industrial operation.

As the silica source powder, also usable is a powder serving as an alumina source powder. Such powder includes, for example, a powder of feldspar.

In the invention, only one of the silica source powder may be used, or two or more thereof may be used as combined.

The silica source powder may contain inevitable impurities derived from starting materials or contaminant mixed in production steps.

The amount of the silica powder source to be used, as silica [$SiO_2$], is generally from 0.1 parts by mass to 20 parts by mass, preferably at most 10 parts by mass relative to the total, 100 parts by mass, of the amount of the titania source powder to be used, as titania [$TiO_2$], and the amount of the alumina source powder to be used, as alumina [$Al_2O_3$].

In the invention, the above-mentioned titania source powder and alumina source powder, optionally along with the magnesia source powder and/or the silica source powder, are mixed and ground by dry process to give a pre-mixture, and the resulting pre-mixture is fired. In the dry grinding, the starting material powders may be dispersed in a small amount of a liquid medium so far as they can keep a substantially dry condition; but in general, the starting material powders are ground without being dispersed in a liquid medium. A suitable grinding container is used for the grinding. In the grinding container, the container wall, the starting material powders and the grinding media are made to collide against each other, and the starting material powders are thus ground.

As the grinding container, generally used is one formed of a metal material such as stainless steel or the like; and its inner surface may be coated with a fluororesin, a silicone resin, an urethane resin or the like. The inner capacity of the grinding container may be generally from 1 time by volume to 4 times by volume as much as the total volume of the starting material powders and the grinding media, preferably from 1.2 times by volume to 3 times by volume.

As the grinding media, for example, usable are alumina beads, zirconia beads and the like having a diameter of from 1 mm to 100 mm, preferably from 5 mm to 50 mm. The hardness of the grinding media is preferably at least 6 as Mohs hardness, more preferably at least 8. The amount of the grinding media to be used may be generally from 1 time by mass to 1000 times by mass, preferably from 5 time by mass to 100 times by mass as much as the total amount of the starting material powders to be used, or that is, the total amount of the titania source powder, the alumina source powder and the magnesia source powder, and optionally the silica source powder.

The grinding may be attained, for example, preferably by putting the starting material powders and the grinding media into a grinding container and then vibrating or rotating the grinding container. By vibrating or rotating the grinding container, the starting material powders may be stirred and mixed with the grinding media therein, and may be ground as sandwiched between the grinding media colliding to each other or between the grinding medias and the inner wall of the grinding container. For vibrating or rotating the grinding container, for example, usable are ordinary grinding machines such as a vibration mill, a planetary mill or the like. From the viewpoint of industrial operation, preferred is a vibration mill.

In the production process of the invention, the starting material powders are ground under a grinding condition of an acceleration of at least 2G (i.e. 2 times as much as the gravitational acceleration ($9.8m/sec^2$)). The starting material

powders are generally ground under a grinding condition of at most 20G(i.e. 20 times as much as the gravitational acceleration). The acceleration is preferably from 3 to 17G or so, more preferably from 5 to 15G or so.

In case where the grinding is attained under the above-mentioned grinding condition by vibrating the grinding container as in a case of using a vibration mill, the amplitude of the grinding is generally from 2 mm to 20 mm, preferably at most 12 mm, and the vibration frequency is generally from 500 times/min to 5000 times/min. The grinding may be attained by continuous process or by batch process; but from the viewpoint of industrial operation, continuous process is preferred.

The requiring time for grinding may be generally from 1 minute to 6 hours, preferably from 1.5 minutes to 2 hours.

In the dry grinding of the starting material powders, additives such as a grinding aid, a deflocculant and the like may be added thereto, or may not be added. In consideration of the easiness of post treatment, preferably, the additives are not added; but a small amount thereof may be added so far as a substantially dry condition can be maintained.

The grinding aid includes, for example, alcohols such as methanol, ethanol, propanol; glycols such as propylene glycol, polypropylene glycol, ethylene glycol; amines such as triethanolamine; higher fatty acids such as palmitic acid, stearic acid, oleic acid; carbon materials such as carbon black, graphite, etc. One or more of these may be used either singly or as combined.

In case where the additives are used, the total amount thereof to be used may be generally from 0.1 parts by mass to 10 parts by mass relative to the total amount, 100 parts by mass, of the starting material powders, or that is, the titania source powder, the alumina source powder and the magnesia source powder and optionally the silica source powder, preferably from 0.5 parts by mass to 5 parts by mass, more preferably from 0.75 parts by mass to 2 parts by mass.

Thus ground by dry process, a pre-mixture can be obtained. In the production process of the invention, the pre-mixture is fired to give the intended aluminium titanate ceramic.

The firing temperature is generally not lower than 1300°C, preferably not lower than 1400°C. From the viewpoint that the obtained aluminium magnesium titanate can be easily ground, the temperature is generally not higher than 1600°C, preferably not higher than 1550°C. Not specifically defined, the heating rate up to the firing temperature may be generally from 2°C/hr to 500°C/hr. The heating rate is more preferably from 10°C/hr to 450°C/hr, even more preferably from 50°C/hr to 400°C/hr. A hold-step at constant temperature may be provided during the process of heating up to the firing temperature.

The pre-mixture is generally fired in air. On the contrary, depending on the type and the blend ratio of the starting material powders (the type and the blend ratio of the titania source powder, the alumina source powder and the magnesia source powder and optionally the silica source powder) the pre-mixture is fired in an inert gas such as nitrogen gas, argon gas or the like, or in a reducing gas such as carbon monoxide gas, hydrogen gas or the like. The water vapor partial pressure in the atmosphere may be reduced in firing.

The pre-mixture is normally fired using an ordinary firing furnace such as a tubular electric furnace, a boxy electric furnace, a tunnel furnace, a far-IR furnace, a microwave heating furnace, a shaft furnace, a reverberating furnace, a rotary furnace, a roller hearth furnace, etc. The firing may be attained by batch process or by continuous process, and may be attained in a static mode or a fluidized mode.

The requiring time for the firing may be a time enough for transition of the pre-mixture into an aluminium titanate ceramic, for example from 10 minutes to 24 hours , depending on the amount of the pre-mixture, the type of the firing furnace, the firing temperature, the firing atmosphere and others.

Normally,the powdery pre-mixture is fired, the perform may be fired. The shaping machine to be used for shaping includes a uniaxial extruder, a uniaxial press, a tabletter, a granulator, etc.

Using a uniaxial extruder, the pre-mixture may be shaped after additives such as a pore-forming agent, a binder, a lubricant, a plasticizer, a dispersant, a solvent and the like are added thereto.

The pore-forming agent includes, for example, carbon materials such as graphite; resins such as polyethylene, polypropylene, polymethyl methacrylate; vegetable materials such as starch, nutshell, walnut shell, corn; ice, dry ice, etc.

The binder includes, for example, celluloses such as methyl cellulose, carboxymethyl cellulose, sodium carboxymethyl cellulose; alcohols such as polyvinyl alcohol; salts such as lignin sulfonate salt; waxes such as paraffin wax, microcrystalline wax; thermoplastic resins such as EVA, polyethylene, polystyrene, liquid-crystalline polymer, engineering plastics and other thermoplastic resins, etc. Some binders may serve also as a pore-forming agent. Such binders are capable of acting to adhere the particles to each other in shaping to thereby keep the molded body, and capable of being fired away in the subsequent firing step to form pores. The binders concretely include polyethylene etc.

The lubricant includes, for example, alcoholic lubricants such as glycerin; higher fatty acids such as caprylic acid, lauric acid, palmitic acid, alaginic acid, oleic acid, stearic acid; metal stearates such as Al stearate, etc. The lubricant generally functions also as a plasticizer.

As the solvent, generally used is ion-exchanged water, as well as alcohols such as methanol, ethanol, etc.

In that manner, the intended aluminium titanate ceramic can be obtained as a fired product. The fired aluminium titanate ceramic is generally massive, but may be ground into an aluminium titanate ceramic powder. The grinding may be attained, for example, using a hand grinder, a mortar, or an ordinary grinding machine such as a ball mill, a vibration mill, a planetary mill, a media-assisted stirring mill, a pin mill, a jet mill, a hammer mill, a roll mill, etc. The aluminium titanate ceramic powder obtained by grinding may be classified according to an ordinary method.

Thus obtained, the aluminium titanate ceramic powder may have an almost spherical morphology, and therefore does not wear away containers in handling the powder.

The obtained aluminium titanate ceramic may contain inevitable impurities derived from starting materials or contaminant mixed in production steps.

An aluminium titanate ceramic molded body can be obtained by shaping and firing the thus-obtained aluminium titanate ceramic powder. The shaped body includes, for example, tools for firing furnaces such as crucibles, setters, saggers, refractories, etc.; exhaust gas filters for exhaust gas purification in internal combustion engines such as diesel engines, gasoline engines, etc.; catalyst carriers; filters for filtration of drinks such as beer, etc.; selective permeation filters for selective permeation of gaseous components to be generated during petroleum purification, such as carbon monoxide, carbon dioxide or the like as well as nitrogen, oxygen or the like, and other ceramic filters; electronic components such as substrates, capacitors, etc.

If desired, the obtained aluminium titanate ceramic shaped body may be ground to reshape. The obtained aluminium titanate ceramic molded body may contain inevitable impurities derived from starting materials or contaminant mixed in production steps.

EXAMPLES

The invention is described in detail with reference to the following Examples; however, the invention should not be limited by such Examples.

The aluminium titanate conversion ratio [AT conversion ratio] of the aluminium titanate obtained in each Example was calculated from the integrated intensity ($I_T$) of the peak [corresponding to the titania-rutile phase (110) face] appearing at the position of $2\theta = 27.4°$ in a powder X-ray diffraction spectrum, and the integrated intensity ($I_{AT}$) of the peak [corresponding to the aluminium titanate phase (230) face or the aluminium magnesium titanate phase (230) face] appearing at the position of $2\theta = 33.7°$, according to the following formula (1):

$$\text{AT Conversion Ratio} = [I_{AT}/(I_T + I_{AT})] \times 100(\%) \qquad (1)$$

The morphology of the aluminium titanate was confirmed with a scanning electromicroscope [SEM].

Example 1:

19.6 g of titanium oxide powder [DuPont's "R-900"], 27.0 g of α-alumina powder [Sumitomo Chemical's "AES-12"], 1.6 g of magnesium carbonate powder [Konoshima Chemical's "Kinboshi"] and 1.8 g of powdery feldspar [Ohira feldspar obtained from Tokushu Seiko, Lot No. "SS-300"] were put into an alumina-made grinding container [inner capacity 3.3 L], along with 5 kg of alumina beads [having a diameter of 15 mm]. The total volume of those titanium oxide powder, α-alumina powder and feldspar was about 50 cm$^3$. Next, the grinding container was vibrated by a vibration mill at an amplitude of 5.4 mm and a vibration frequency of 1760 times/min [corresponding to acceleration of 10G], and at a driving power of 5.4 kW for 2 minutes thereby grinding the mixture in the grinding container to give a pre-mixture. 5 g of the pre-mixture was put into an alumina-made crucible, then heated up to 1450°C in air in a boxy electric furnace at a heating rate of 300°C/hr, and kept at the temperature for 4 hours to be fired. Next, this was left cooled to room temperature to give a fired body. The fired body was ground in a mortar to give a powder. The powder was analyzed through powder X-ray diffractiometry for the diffraction spectrum of the powder, and the powder showed a crystal peak of aluminium magnesium titanate. The AT conversion ratio of the powder was calculated and was 100 %. The morphology of the powder was checked with SEM, and almost all the particles constituting the powder were almost spherical.

Comparative Example 1:

The same titanium oxide powder [DuPont's "R-900"], α-alumina powder [Sumitomo Chemical's "AES-12"), magnesium carbonate powder [Konoshima Chemical's "Kinboshi"] and feldspar [Ohira feldspar obtained from Tokushu Seiko, Lot No. "SS-300"] as in Example 1 were taken all in the same amount as in Example 1, and mixed in a plastic bag to prepare a pre-mixture. Not ground, 5 g of the pre-mixture was taken, then fired and ground like in Example 1 to give a powder. Through powder X-ray diffraction spectrometry, the powder was identified, and diffraction peaks for aluminium magnesium titanate and titania (rutile type) were confirmed. The AT conversion ratio of the powder was 50 %. The morphology of the powder was checked with SEM, and almost all the particles were irregular.

Example 2:

A fired body was produced in the same manner as in Example 1, for which, the amount of the titanium oxide powder [R-900] was 23.0 g, the amount of the α-alumina powder [AES-12] was 19.6 g, the amount of the magnesium carbonate powder [Kinboshi] was 4.0 g and the amount of the feldspar [SS-300] was 3.3 g. The obtained powder showed an X-ray diffraction peak of aluminium magnesium titanate, and the AT conversion ratio thereof was 100 %. Almost all the particles constituting the powder were almost spherical.

Example 3:

20.0 g of titanium oxide powder [R-900], 27.4 g of α-alumina powder [Sumitomo Chemical's "AES-12"], 0.8 g of magnesia powder [Ube Material's "UC-95M"] and 1.8 g of glass frit [Takara Standard's "CK5431M2"] were put into an alumina-made grinding container [inner capacity 3.3 L], along with 5 kg of alumina beads [having a diameter of 15 mm]. Next, in the same manner as in Example 1, a pre-mixture was obtained, then a fired body was obtained, and a powder was obtained. The powder was analyzed through powder X-ray diffractiometry for the diffraction spectrum of the powder, and the powder showed a crystal peak of aluminium magnesium titanate. The AT conversion ratio of the powder was calculated and was 100 %. The morphology of the powder was checked with SEM, and almost all the particles constituting the powder were almost spherical.

INDUSTRIAL APPLICABILITY

The aluminium titanate ceramic obtained by the process of this invention is favorable, for example, for tools for firing furnaces such as crucibles, setters, saggers, refractories, etc.; exhaust gas filters for exhaust gas purification in internal combustion engines such as diesel engines, gasoline engines, etc.; catalyst carriers; filters for filtration of drinks such as beer, etc.; selective permeation filters for selective permeation of gaseous components to be generated during petroleum purification, such as carbon monoxide, carbon dioxide or the like as well as nitrogen, oxygen or the like, and other ceramic filters; and electronic components such as substrates, capacitors, etc.

**Claims**

1. A process for producing an aluminium titanate ceramic, comprising mixing a titania source powder and an alumina source powder followed by dry grinding in the presence of grinding media under a grinding condition of an acceleration of at least 2G to give a pre-mixture, and firing the resulting pre-mixture.

2. The production process according to claim 1, wherein the amount of the titania source powder to be used, as titania, is preferably from 30 to 70 parts by mass relative to the total, 100 parts by mass, of the amount of the titania source powder to be used, as titania, and the amount of the alumina source powder to be used, as alumina.

3. The production process according to claim 1 or 2, wherein the titania source powder and the alumina source powder are mixed along with a magnesia source powder.

4. The production process according to claim 3, wherein the amount of the magnesia source powder to be used, as magnesia, is at most 10 parts by mass relative to the total, 100 parts by mass, of the amount of the titania source powder to be used, as titania, and the amount of the alumina source powder to be used, as alumina.

5. The production process according to any one of claims 1 to 4, wherein the titania source powder and the alumina source powder are mixed along with a silica source powder.

6. The production process according to claim 5, wherein the amount of the silica source powder to be used, as silica, is at most 20 parts by mass relative to the total, 100 parts by mass, of the amount of the titania source powder to be used, as titania, and the amount of the alumina source powder to be used, as alumina.

7. The production process according to claim 5 or 6, wherein the silica source powder is feldspar or glass frit.

8. The production process according to any one of claims 1 to 7, wherein a vibration mill is used for the grinding.

9. The production process according to claim 8, wherein the amplitude of the vibration mill is from 2 to 20 mm, and the vibration frequency is from 500 to 5000 times/min.

10. A process for producing an aluminium titanate ceramic powder, comprising grinding the aluminium titanate ceramic produced according to the production process of any of claims 1 to 9.

11. A process for producing a pre-mixture containing a titania source powder and an alumina source powder and capable of being converted into an aluminium titanate ceramic by firing, wherein a titania source powder and an alumina source powder are mixed and ground by dry process under a grinding condition of an acceleration of at least 2G.

## INTERNATIONAL SEARCH REPORT

| International application No. |
| --- |
| PCT/JP2008/073596 |

A. CLASSIFICATION OF SUBJECT MATTER
*C04B35/46*(2006.01)i

According to International Patent Classification (IPC) or to both national classification and IPC

B. FIELDS SEARCHED

Minimum documentation searched (classification system followed by classification symbols)
*C04B35/46*

Documentation searched other than minimum documentation to the extent that such documents are included in the fields searched
Jitsuyo Shinan Koho          1922-1996    Jitsuyo Shinan Toroku Koho    1996-2009
Kokai Jitsuyo Shinan Koho    1971-2009    Toroku Jitsuyo Shinan Koho    1994-2009

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| Y | JP 2005-314186 A  (Osera Kabushiki Kaisha), 10 November, 2005 (10.11.05), Par. No. [0019]; examples 1, 3 (Family: none) | 1-11 |
| Y | JP 2001-89225 A  (Sumitomo Chemical Co., Ltd.), 03 April, 2001 (03.04.01), Par. Nos. [0018], [0019] (Family: none) | 1-11 |
| Y | JP 4-324867 A  (Konica Corp.), 13 November, 1992 (13.11.92), Par. Nos. [0020], [0026] & US 5364730 A | 9 |

| ☒  Further documents are listed in the continuation of Box C. | ☐  See patent family annex. |
| --- | --- |

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered   to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search 05 February, 2009 (05.02.09) | Date of mailing of the international search report 17 February, 2009 (17.02.09) |
| --- | --- |
| Name and mailing address of the ISA/ Japanese Patent Office | Authorized officer |
| Facsimile No. | Telephone No. |

Form PCT/ISA/210 (second sheet) (April 2007)

9

**INTERNATIONAL SEARCH REPORT**

| International application No. |
| --- |
| PCT/JP2008/073596 |

C (Continuation).   DOCUMENTS CONSIDERED TO BE RELEVANT

| Category* | Citation of document, with indication, where appropriate, of the relevant passages | Relevant to claim No. |
| --- | --- | --- |
| Y | JP 6-87651 A  (Toshiba Corp.),<br>29 March, 1994 (29.03.94),<br>Par. No. [0003]<br>(Family: none) | 10 |
| A | JP 2-9747 A  (Kubota Tekko Kabushiki Kaisha),<br>12 January, 1990 (12.01.90),<br>Claims<br>(Family: none) | 1-11 |

Form PCT/ISA/210 (continuation of second sheet) (April 2007)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2005105704 A

**Non-patent literature cited in the description**

- *Key Engineering Materials,* 2007, vol. 336-338, 1327-1330